# NEUE EUROPÄISCHE PATENTSCHRIFT

(11) **EP 0 531 987 B2**
(45) Veröffentlichungstag und Bekanntmachung des Hinweises auf die Entscheidung über den Einspruch: **05.11.2003**
(45) Hinweis auf die Patenterteilung: 21.10.1998
(21) Anmeldenummer: 92115467.0
(22) Anmeldetag: 10.09.1992
(51) Int. Cl.: G05D 23/24

(54) **Elektrische Heizeinheit**
Electrical heating unit
Dispositif de chauffage électrique

(30) Priorität: 12.09.1991 DE 4130337
(43) Veröffentlichungstag der Anmeldung: 17.03.1993
(73) Patentinhaber: E.G.O. Elektro-Gerätebau GmbH, 75038 Oberderdingen (DE)
(72) Erfinder: Schilling, Wilfried, W-7527 Kraichtal-Mue. (DE); Kicherer, Robert, W-7519 Oberderdingen (DE)
(74) Vertreter: Patentanwälte Ruff, Wilhelm, Beier, Dauster & Partner

(56) Entgegenhaltungen:
- EP-A- 0 471 171
- DE-A- 2 705 528
- DE-A- 2 749 765
- DE-A- 3 314 501
- DE-A- 3 334 425
- DE-A- 3 539 581
- DE-A- 3 545 454
- DE-A- 3 810 586
- DE-A- 3 903 978
- DE-A- 4 007 680
- DE-C- 2 932 844
- GB-A- 2 041 673
- GB-A- 2 067 857
- US-A- 4 394 564

## Beschreibung

Die Erfindung betrifft eine elektrische Heizeinheit nach dem Oberbegriff des Patentanspruches 1. Sie soll insbesondere für eine Kochstelle oder andere zu beheizende Bereiche geeignet sein, bei welchen durch Wärmeleitung und/oder Strahlung Wärmeenergie im Bereich einer Heizfläche abgegeben werden soll.

Bei solchen Heizeinheiten, z.B. Elektro-Kochplatten, kann erfindungsgemäß eine Temperaturregelung oder -steuerung der von gesonderten Heizwiderständen aufgenommenen bzw. abgegebenen Leistungen vorgesehen sein. Hierzu kann ein Temperaturfühler im ringförmig beheizten Bereich, im unbeheizten Zentrum oder an anderer Stelle unmittelbar der Strahlung mindestens eines Heizwiderstandes und/oder eines Heiz- bzw.

Kochplattenkörpers ausgesetzt sein und bei Erreichen einer bestimmten, manuell eingestellten Temperatur die Leistung mindestens eines Heizwiderstandes teilweise oder ganz abschalten sowie nach Erreichen einer unteren Grenztemperatur wieder einschalten. Ist ein Leistungssteuergerät vorgesehen, so schaltet dieses die genannte Leistung periodisch ein und aus, wobei die relative Einschaltzeit mit höher eingestellter Temperatur zunimmt.

Besonders bei hoher Leistungsabnahme, wie sie z. B. beim Aufheizen großer Wassermengen gegeben ist, können die Schaltvorgänge der Regelung bzw. Steuerung zu nachteiligen Schaltimpulsen und insbesondere einer unzulässigen Knackrate führen. Die Entnahme der Wärmeenergie kann ferner in unterschiedlichen Flächenbereichen der Heizfläche unterschiedlich sein und auch wechseln, wodurch sich eine gewünschte unterschiedliche oder gleichmäßige Temperaturverteilung über die Fläche unerwünscht ändert, ohne daß Möglichkeiten gegeben sind, diesen Veränderungen entgegen zu steuern. Im Falle eines Kochgefäßes liegt meist der Boden im Bereich des Außenumfanges berührend an der Koch- bzw. Heizfläche an, während er im Zentrum berührungsfrei ist, so daß in diesem Bereich die Heizfläche mangels guten Wärmeüberganges in der Temperatur stark ansteigt.

Die GB-A-2 067 857 betrifft eine Heizeinheit, bei welcher zwei Heizungen aneinanderschließend so umgeschaltet werden, daß bei Betrieb der einen die andere außer Betrieb ist.

Die DE-A 3 810 586 zeigt eine Zweikreis-Beheizung mit Temperaturfühlern, welche als Überhitzungsschutz dienen.

Die DE-A35 39 581 zeigt ein Verfahren zum Steuern elestrischer Heizungen eines Elektroherdes. Um Netzrückwirkungen zu verringern werden dort die Lasten zeitlich aneinandergekettet innerhalb einer Taktzeit an das Netz geschaltet.

Der Erfindung liegt die Aufgabe zugrunde, eine Heizeinheit zu schaffen, bei welcher Nachteile bekannter Ausbildungen oder der beschriebenen Art vermieden sind und die insbesondere eine gegenseitige relative Anpassung der Temperatur in gesonderten Flächenbereichen der Heizfläche ermöglicht.

Erfindungsgemäß sind die Merkmale nach Patentanspruch 1 vorgesehen. Es können zwei oder mehr benachbarte, aneinanderschließende, ineinanderübergehende und/oder innerhalb einer gemeinsamen Umfangsbegrenzung der Heizfläche liegende Flächenbereiche gesondert geregelt werden. Dadurch kann die Temperatur bzw. die Heizleistung für jeden dieser Flächenbereiche z.B. daran angepaßt werden, wieviel Wärmeenergie dem jeweiligen Flächenbereich im Verhältnis zu mindestens einem anderen Flächenbereich entnommen wird. Ändert sich dieses Verhältnis im Laufe der Zeit, so kann die Temperaturregelung nachfolgen. Dadurch ist es sowohl möglich, die beiden Flächenbereiche im wesentlichen unabhängig von der Wärmeentnahme bei gleicher Temperatur oder auf einer gewünschten Temperaturdifferenz zu halten, die z.B. zeitund/oder temperaturabhängig verändert werden kann.

Zweckmäßig erfolgt die Temperaturregelung nicht durch eine Änderung der thermischen Ankopplung der Flächenbereiche, sondern durch eine Änderung der den zugehörigen Heizungen zugeführten Leistung, insbesondere der zugeführten elektrischen Leistung. Ferner wird dadurch erreicht, daß die gewünschte Temperaturdifferenz zwischen den Flächenbereichen durch gegenläufiges Regeln beider Flächenbereiche schneller erzielt wird.

Erfindungsgemäß wird wenigstens ein bestimmter Leistungsbetrag periodisch und wechselweise auf mindestens zwei Flächenbereiche umgeschaltet. Bei Betrieb mit Wechselstrom ist dabei die längste Periodendauer vorteilhaft wesentlich kürzer als eine Sekunde oder eine halbe Sekunde. Die Umschaltung erfolgt im Augenblick des Durchganges der wellenförmigen Wechselstrom-Kennlinie durch die mittlere Null-Linie, so daß keine Störimpulse auftreten. Erfolgt dabei der Einschaltvorgang für den einen Flächenbereich praktisch zeitgleich mit dem Ausschaltvorgang für den anderen Flächenbereich, so ergibt sich keinerlei Unterbrechung in der von der Stromquelle abgenommenen Leistung, so daß der Umschaltvorgang keinerlei Knackimpulse verursacht.

Dies wird noch weiter verbessert, wenn die Heizungen, zwischen denen umgeschaltet wird, im wesentlichen gleiche Aufnahme- bzw. Nennleistung haben. Bei einer Umschaltung zwischen mindestens zwei Heizungen bzw. Heizkreisen können z. B. die Zeitintervalle der Leistungszufuhr für alle Heizungen etwa gleich groß gewählt werden, so daß alle Heizungen im wesentlichen mit einem gleichen Prozentanteil zur gesamten Heizleistung der Heizfläche beitragen. Ergibt sich durch geringere Wärmeentnahme im Heizbereich einer Heizung ein entsprechender Temperaturanstieg, so wird dieser durch Temperaturfühlung erfaßt und es wird durch eine selbstätig bzw. temperaturabhängig arbeitende Steuerung die Dauer der Zeitintervalle der Leistungszufuhr zu dieser Heizung verringert, während die entsprechende Dauer für mindestens eine weitere Heizung erhöht wird, bis sich die einer Justierung entsprechende Temperaturverteilung wieder eingestellt hat. Z. B. können von 20 Vollwellen der Wechselstrom-Kennlinie in einem solchen Fall fünf Vollwellen je Zeitintervall an die Heizung des wärmeren Bereiches und 15 Vollwellen an die Heizung des kälteren Bereiches gegeben werden, was einer Leistungsaufteilung von 25% zu 75% entspricht. Da bei Wechselstrom mit 50 Hertz 50 Vollwellen zur Verfügung stehen, beträgt das kürzere Zeitintervall nur 1/10 Sekunde, während das längere Zeitintervall etwa 1/3 Sekunde entspricht. Sobald die gewünschte Temperaturverteilung erreicht ist, kann selbstätig so umgeschaltet werden, daß die jeweils gewünschte Verteilung erhalten bleibt.

Zur Erfassung der Temperatur bzw. von Temperaturänderungen im jeweiligen Flächenbereich kann die Temperaturfühlung unmittelbar durch mindestens einen zugehörigen Heizwiderstand erfolgen, z. B. wenn dieser als PTC- oder NTC-Widerstand ausgebildet ist. Auch kann der jeweils von der Heizungszufuhr abgeschaltete Heizwiderstand während des zugehörigen Abschalt-Zeitintervalles als Widerstands-Temperaturfühler geschaltet sein. Es ist aber auch in vorteilhafter Weise möglich, für einen, mindestens zwei oder alle Heizungen jeweils mindestens einen gesonderten Temperaturfühler vorzusehen, der im wesentlichen nur die Temperatur des zugehörigen Flächenbereiches und/oder der zugehörigen Heizung erfaßt, wodurch die Temperaturen der verschiedenen Bereiche einfach erfaßt und elektronisch selbstätig miteinander so verglichen werden können, daß der Vergleichswert als Funktion für die Umschaltvorgänge herangezogen werden kann.

Die beschriebene Nachregelung durch relative Veränderung der Zeitintervalle ist insbesondere dann zweckmäßig, wenn große Mengen Wärmeenergie entnommen werden, wie das z. B. der Fall ist, wenn in einem großen Kochgefäß große Gargutmengen mit hohem Wasseranteil von Zimmertemperatur annähernd auf Kochtemperatur erhitzt werden sollen. Bei Gargut mit geringerem Energiebedarf, z. B. Pfannengerichten, die nicht mit der vollen bzw. höchstmöglichen Leistung der Heizeinheit, sondern mit einer etwa um die Hälfte geringeren Heizleistung zu erhitzen sind, ist eine möglichst gleichmäßige Erwärmung des Pfannenbodens und daher auch eine Temperaturerhöhung in demjenigen Flächenbereich erwünscht, in dem der Wärmeübergang schlechter ist. Um in beiden Betriebsweisen arbeiten zu können, ist zweckmäßig die genannte Nachregelung der Zeitintervalle erst ab einer vorbestimmten Temperaturhöhe vorgesehen, die höher als 250°C und vorzugsweise bei 300°C liegt, wobei diese Temperatur nur um wenige Grade, z. B. etwa 30 - 50°C unterhalb derjenigen Maximaltemperatur liegen kann, bei welcher die Leistungszufuhr durch einen Überhitzungsschutz abgeschaltet wird. Der Übergang von der Umschaltung mit gleichbleibenden Zeitintervallen auf nachregelnde Zeitintervalle kann in Abhängigkeit von der Schaltstellung des Steuergerätes erfolgen, mit welchem die Leistung der Heizeinheit manuell eingestellt werden kann und/oder es kann dieser Übergang temperaturabhängig selbstätig dadurch erfolgen, daß ein Temperaturfühler die genannte Übergangstemperatur erfaßt. Das Zurückschalten auf gleichbleibende Zeitintervalle kann dann ebenfalls wieder manuell und/oder temperaturabhängig erfolgen.

Durch die beschriebene Temperaturüberwachung der Heizfläche bzw. der Flächenbereiche ist auch ein Überhitzungsschutz gegeben, so daß ein gesonderter Temperaturschalter bzw. Temperaturfühler für den Überhitzungsschutz nicht erforderlich ist. Auch kann die beschriebene Ausbildung zur Topferkennung bzw. zur automatischen Erkennung dafür herangezogen werden, ob die Heizfläche ohne bestimmungsgemäße Wärmeentnahme im Leerlauf betrieben ist oder die bestimmungsgemäße Wärmeentnahme, z. B. durch einen auf der Heizfläche aufstehenden Topf, stattfindet. Hierzu können die Leistung, die Temperatur und gegebenenfalls deren Zeitdauer elektronisch verglichen werden und es kann von einem sich daraus ergebenden Wert abgeleitet werden, ob die Heizeinheit im Leerlauf läuft oder nicht. Ferner kann hierzu die Leistungsverteilung bzw. die Temperaturverteilung zwischen mindestens zwei Flächenbereichen erfaßt werden; ist diese Verteilung besonders gleichmäßig, so entspricht dies der Tatsache, daß keine Wärmeentnahme stattfindet und die Steuermittel-schalten nach vorprogrammierter bzw. vorjustierter Zeitdauer wenigstens einen Teil der zugeführten Leistung ab. Sobald dann eine Wärmeentnahme stattfindet, wird diese Leistung selbstätig wieder zugeschaltet.

Anstatt die Leistung in der beschriebenen Weise zwischen gesonderten, im Abstand voneinander liegenden Heizflächen bzw. deren Heizungen umzuschalten, erfolgt die Umschaltung zweckmäßig zwischen Flächenbereichen einer einzigen Heizfläche. Die jeweilige Heizfläche ist insbesondere durch einen im wesentlichen geschlossenen Umfang und eine annähernd lükkenlos beheizte Ringzone definiert, deren Umfang im wesentlichen symetrisch zu einer Axialebene bzw. einer Mittelachse der Heizfläche liegt. Im Falle einer Kochstelle bildet diese Heizfläche dabei eine wenigstens entlang des Umfanges im wesentlichen ununterbrochen beheizte Standfläche für ein einziges Kochgefäß.

Durch die erfindungsgemäße Ausbildung können z. B. im Falle einer Kochstelle die Ankochzeiten stark verkürzt werden. Zur lückenlosen bzw. extrem schnellen elektronischen Umschaltung können als Relais sogenannte Triac's verwendet werden, so daß auf das Stromnetz keine Schaltimpulse wirken. Soll eine besonders hohe Ankochleistung zur Verfügung stehen, so können durch eine entsprechende manuelle Einstellung auch mindestens zwei Flächenbereiche bzw. die zugehörigen Heizungen gleichzeitig und im wesentlichen ohne Umschaltung mit ihrer Nennleistung betrieben werden, bis zeit- und/oder temperaturabhängig nur noch ein Teil dieser erhöhten Leistung in der beschriebenen Weise zwischen den Flächenbereichen umgeschaltet wird.

Diese und weitere Merkmale gehen außer aus den Ansprüchen auch der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:

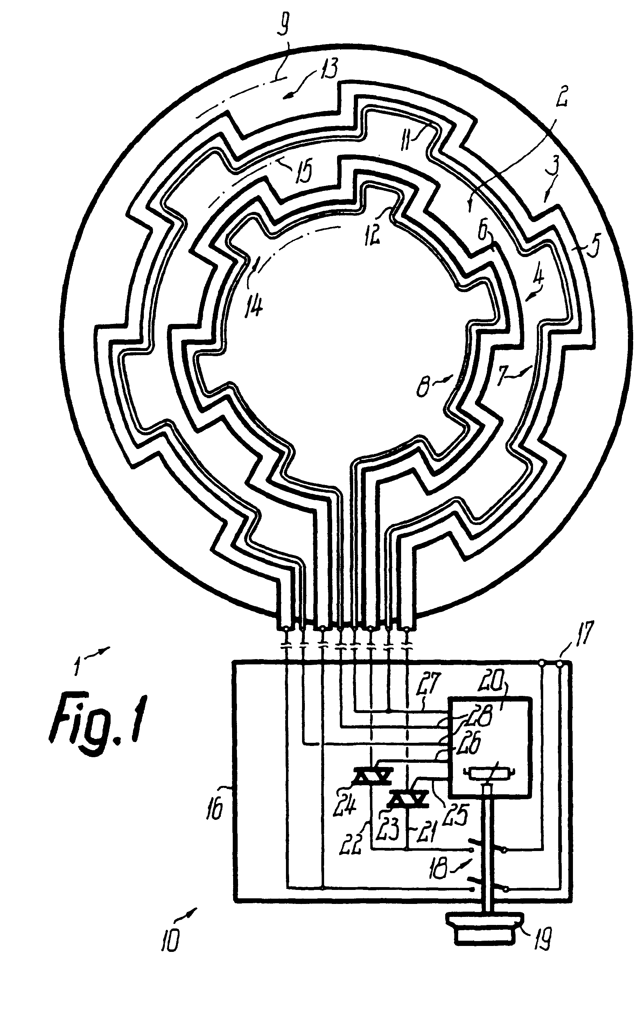

- Fig. 1: eine erfindungsgemäße Heizeinheit in vereinfachter Ansicht und
- Fig. 2: den Umschaltvorgang anhand einer Wechselstrom-Kennlinie.

Die Heizeinheit 1 kann wenigstens teilweise als Strahlheizkörper zur Anordnung an einer transluzenten Herdplatte aus Glaskeramik o. dgl., als mit einer solchen Kochstellen- bzw. Herdplatte baulich vereinte Heizeinheit, als Elektrokochplatte mit einem metallischen Kochplattenkörper o. dgl. ausgebildet sein und ist bevorzugt als thermisch massearme Kochplatte in Dickschicht-Technik ausgebildet, wobei die thermische Speicherkapazität und/oder Leitungsfähigkeit ihres Werkstoffes spezifisch zweckmäßig wesentlich geringer als diejenige eines metallischen Werkstoffes, insbesondere von Stahlguß ist. Zur Bildung heizender Bereiche sind nur zwei Heizungen 3, 4 bzw. Heizwiderstände 5, 6 vorgesehen, die jeweils einen von der anderen Heizung gesonderten, in sich geschlossenen und gesondert steuer- bzw. regelbaren Heizkreis bilden.

Die Heizungen 3, 4 dienen zur Beheizung im Bereich einer Heizfläche 2. Im Falle eines Strahlheizkörpers kann vor dessen Montage an der Rückseite einer Glaskeramikplatte die Heizfläche 2 als ein im wesentlichen ebener Bereich verstanden werden, in dem die Heizungen 3, 4 liegen bzw. bis zu dem die Heizwiderstände 5, 6 mit ihrer von einem thermisch und/oder elektrisch isolierenden Träger abgekehrten Vorder- oder Oberseite reichen. Die Heizwiderstände 5, 6 sind z. B. an der Bodenoberseite dieses topfförmigen Isolationsträgers angeordnet, der mit seinem Topfrand so an der Rückseite der Kochplatte zu befestigen ist, daß die Stirnseite seines Topfrandes im wesentlichen geschlossen bzw. dicht mit Pressung an der Kochplatte anliegt und die Heizungen 4, 5 innerhalb des Topfrandes liegen.

Nach Verbindung des Strahlheizkörpers mit der Kochplatte, im Falle der Anordnung mindestens eines Heizwiderstandes an der Rückseite der Kochplatte als aufkaschierter Dickschichtwiderstand und im Falle einer Heizeinheit, bei welcher mindestens ein Heizwiderstand in Form einer Widerstandswendel, eines Rohrheizkörpers o. dgl. an der Rückseite der Kochplatte befestigt bzw. elektrisch isoliert eingebettet ist, ist die Heizfläche 2 als die vom Heizwiderstand abgekehrte, im wesentlichen ebene Seite der Kochplatte bzw. des Plattenkörpers zur verstehen. In jedem Fall ist die Heizfläche 2 am Außenumfang etwa in dem Bereich begrenzt, bis zu welchem mindestens eine Heizung 3thermisch deutlich und bereits kurze Zeit nach ihrem Einschalten erwärmend wirkt, wobei der Radialabstand des Außenumfanges bzw. der äußeren Begrenzung 9 der Heizfläche 2 vom äußersten Bereich der Heizungen 3, 4 wesentlich kleiner als deren Radialerstreckung ist.

Jeder Heizung 3, 4 ist eine gesonderte Temperaturfühlung 7, 8 zugeordnet, die zweckmäßig etwa im Bereich der zugehörigen Heizung 3, 4 und/oder unmittelbar benachbart zu derjenigen Seite dieser Heizung 3, 4 fühlt, die dem Zentrum der Heizfläche 2 zugekehrt ist. Die Temperaturfühlung kann dabei im wesentlichen entlang des gesamten zugehörigen Heizwiderstandes 6 bzw. 7 erfolgen. Ferner kann die Temperaturfühlung etwa in der Ebene der zugehörigen Heizung 3 bzw. 4 oder, z. B. im Fall eines Strahlheizkörpers, nahe bei oder an der Rückseite der Kochplatte erfolgen, von welcher die jeweilige Heizung 3 bzw. 4 freiliegend einen lichten Abstand haben kann.

Zur manuellen sowie selbstätig in Abhängigkeit von Bestimmungsgrößen erfolgenden Steuerung der Heizungen 3, 4 ist als Steuermittel eine Steuereinheit 10 vorgesehen, die zweckmäßig eine von der beheizten Baugruppe gesonderte Baugruppe bildet und mit der beheizten Baueinheit über flexible Verbindungsleitungen verbunden ist. Die Steuereinheit 10 dient sowohl zur manuellen Einstellung der gewünschten Temperatur bzw. Heizleistung der beheizten Baugruppe als auch zur selbstätigen Durchführung von Regelvorgängen aufgrund von Temperaturwerten, die temperaturabhängig veränderliche Meßwiderstände 11, 12 der Temperaturfühlungen 7, 8 über Signalleitungen an Steuer- bzw. Regelelemente der Steuereinheit 10 weiterleiten.

Die Heizwiderstände 5, 6 sind annähernd geschlossen ringförmig sowie koaxial ineinander angeordnet und der jeweilige, streifenförmig langgestreckte Heizwiderstand 5 bzw. 6 hat innerhalb seines Ringverlaufes einen mäanderartigen Verlauf dadurch, daß in Umfangsrichtung aneinanderschließend verlaufende Umfangsabschnitte unterschiedliche Radialabstände vom Zentrum der Heizfläche 2 haben und über etwa radiale Zwischenabschnitte ineinander übergehen, wobei die Umfangsabschnitte nur zwei deutlich unterschiedliche Radialabstände vom Zentrum haben, etwa gleich lang sind und eine Länge haben, die wesentlich größer als ihre Breite ist. Der jeweilige, gegenüber der Breite des Heizwiderstandes wesentlich schmalere Meßwiderstand 11 bzw. 12 verläuft etwa parallel und mit geringem, annähernd konstantem Abstand benachbart zur zugehörigen Längskante des ihm zugeordneten Heizwiderstandes 5 bzw. 6, so daß auch der Meßwiderstand 11 bzw. 12 einen mäanderartigen Verlauf hat und ringförmig annähernd geschlossen ist. Der jeweilige Meßwiderstand 11 bzw. 12 kann ebenfalls als Dickschichtfühler, z. B. durch Aufdrucken, unmittelbar auf die Rückseite der Kochplatte aufkaschiert sein.

Durch die Heizwirkung der jeweiligen Heizung 3 bzw. 4 ist in der Heizfläche ein im wesentlichen ringförmig geschlossener Flächenbereich 13 bzw. 14 bestimmt, dessen radiale Ringbreite größer als die entsprechende Streifenbreite des zugehörigen Heizwiderstandes 5 bzw. 6 und auch geringfügig größer als die zugehörige Breite desjenigen Flächenfeldes ist, über welches sich die Heizung 3 bzw. 4 in Folge ihres mäanderartigen Verlaufes erstreckt, weil die Heizung 3 bzw. 4 geringfügig über dieses Flächenfeld hinaus durch Strahlung und/oder Wärmeleitung deutlich meß- und fühlbar wirkt. Der Außenumfang des äußeren Flächenbereiches 13 bestimmt die äußere Begrenzung 9 der Heizfläche 2 und innerhalb des Innenumfanges des inneren Flächenbereiches 14 ist keine Beheizung vorgesehen, wobei die Weite dieses unbeheizten Innenfeldes mindestens 1/3 so groß wie die Weite des Außenumfanges 9 ist. Zwischen den beiden miteinander berührungs- bzw. übergangsfreien Heizungen 3, 4 schließen die beiden Flächenbereich 13, 14 über eine zu ihnen etwa parallel ringförmige Grenzzone 15 aneinander an, die zwischen den genannten Flächenfeldem der Heizwiderstände 5, 6 liegt und zweckmäßig keine linienoder lückenförmige, sondern eine bandförmige Grenzzone bildet, in welcher beide Heizungen 3, 4 bei Betrieb gleichermaßen durch Strahlung und/oder Wärmeleitung wirken können, wobei diese Grenzzone an beide Flächenfelder im wesentlichen anschließen kann. Dadurch ergibt sich zwischen dem Innenumfang und der äußeren Begrenzung 9 eine im wesentlichen lückenlose Beheizung der Heizfläche 2. Im Falle einer Kochplatte definiert die äußere Begrenzung 9 die Größe der Boden-Aufstandsfläche des auf dieser Kochplatte zu verwendenden Kochgefäße. Statt einer kreisrunden Begrenzung 9 könnte auch eine rechteckige, langrunde oder andere Begrenzung vorgesehen sein. Die äußere Begrenzung 9 ist hinsichtlich der thermischen Beaufschlagung lediglich dort geringfügig durchbrochen, wo die Anschlußenden der Heizwiderstände 5, 6 quer zur Mittelachse der Heizfläche 2 nach außen geführt sind.

Die Regel- und Steuereinheit 10 weist einen z. B. gehäuseförmigen Sockel 16 aus elektrisch isolierendem Werkstoff auf, in dem vorzugsweise vollständig versenkt bzw. verkapselt alle elektrisch leitenden Teile bis auf Anschlüsse für die Verbindungsleitungen zur beheizten Baugruppe und Anschlüsse 17 für Stromversorgungs- bzw. Geräteleitungen angeordnet sind. Der Sokkel 16 ist z. B. an der Innenseite einer Bedienungsblende des zugehörigen Gerätes, wie eines Kochherdes zu befestigen und weist eine über seine Außenseite frei zugänglich vorstehende Handhabe 19 zur manuellen Einstellung des jeweils gewünschten Betriebszustandes auf. Die Handhabe 19 sitzt zweckmäßig auf einer Stellwelle zur Betätigung von Kontakten, insbesondere von Schaltkontakten 18, mit welchen Verbindungsleitungen zwischen den Anschlüssen 17 und den übrigen elektrisch leitenden Teilen allpolig geöffnet und geschlossen werden können. Ausgehend von einer Nullstellung der Handhabe 19, in welcher die Schaltkontakte 18 geöffnet sind, dient ein erster Dreh-Schaltschritt zum Schließen der Schaltkontakte 18 und weitere Drehschritte dienen zur Einstellung der unterschiedlichen Betriebsweisen.

Die Schaltwelle bzw. die Handhabe 19 wirkt hierzu des weiteren auf eine elektronische Steuereinrichtung 20, die als gesonderte Baugruppe innerhalb des Sokkels 16 angeordnet ist. Die beiden, von den Anschlüssen 17 kommenden Verbindungsleitungen sind nach den Schaltkontakten 18 an die zugehörigen Anschlußenden der Heizwiderstände 5, 6 angeschlossen, wobei eine Verbindungsleitung in gesonderte Anschlußleitungen 21, 22 für jeweils ein Anschlußende jedes der Heizwiderstände 5, 6 verzweigt ist. In jeder Anschlußleitung 21, 22 ist ein elektronisches Relais 23 bzw. 24 zwischengeschaltet, dessen Funktionszustände von der Steuereinheit 10 jeweils über eine Steuerleitung 25 bzw. 26 gesteuert werden. Die Anschlußenden der Meßwiderstände 11, 12 sind über Signalleitungen 27, 28 gesondert an Eingänge der Steuereinrichtung 20 angeschlossen, welche die von den Temperaturfühlungen 7, 8 gemessenen absoluten Temperaturen, deren Unterschied sowie gegebenenfalls deren Zeitdauer verarbeitet und abgeleitet davon Steuersignale an die Relais 23, 24 weitergibt. Die Steuerung ist so vorgesehen, daß die Relais 23, 24 entweder beide für den Stromdurchgang geschlossen sein können oder daß abwechselnd das eine Relais geschlossen und das andere offen ist, wobei beim Umschalten das Öffnen bzw. Schließen des einen Relais zeitgleich mit dem Schließen bzw. Öffnen des anderen Relais erfolgt.

Die Steuereinheit 10 kann ein aufgrund einer Steuerbeheizung taktend arbeitendes Leistungssteuergerät und/oder ein Temperaturregler sein, der über einen oder beide Temperaturfühler die Temperatur im Bereich der Heizfläche 2 so überwacht, daß bei Erreichen einer eingestellten Temperatur die den Heizungen 3, 4 zugeführte elektrische Leistung heruntergeregelt und nach Unterschreiten einer vorbestimmten unteren Grenztemperatur wieder in vollem Umfang zugeführt wird. Gleichzeitig arbeitet die Steuereinrichtung 20 nach Art einer Vollwellensteuerung so, daß sie die Relais 23, 24 nur in dem Augenblick umschaltet, in welchem die Kennlinie des zugeführten Wechselstromes nach Beendigung einer vollen Kennlinienwelle im Durchlauf durch die Null-Linie ist, auf deren beiden Seiten die Wellenbögen der Kennlinie liegen.

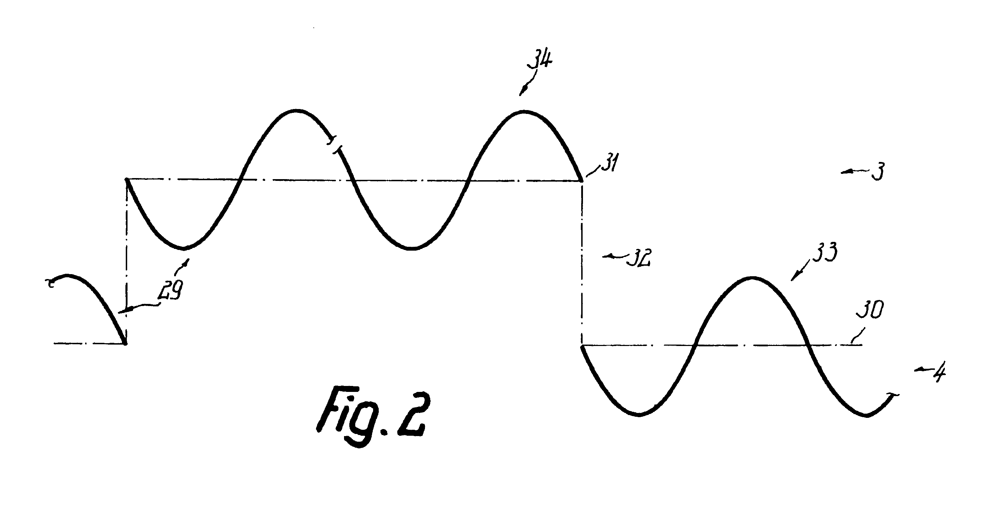

In Fig. 2 ist die Kennlinie 29 einschließlich der Null-Linie 30 in zwei Ebenen dargestellt, und zwar in der oberen Ebene während der Leistungsversorgung der äußeren Heizung 3 und in der unteren Ebene während der Leistungsversorgung der inneren Heizung 4 Die Relais 23, 24 werden z. B. so betrieben, daß aufeinanderfolgende Wellenpakete von z. B. zwanzig aneinanderschließenden Vollwellen der Kennlinie 29 jeweils in beliebiger unterschiedlicher oder gleicher Verteilung unter einmaliger Teilung zur Leistungsversorgung zeitlich aneinanderschließend beiden Heizungen 3, 4 zugeführt werden. Von den zwanzig Vollwellen jedes Wellenpaketes kann dann z. B. ein Wellen-Teilpaket 33 mit acht kontinuierlich aneinanderschließenden Vollwellen der Heizung 4 und dann durch Umschaltung 32 das verbleibende Wellen-Teilpaket 34 mit zwölf Vollwellen der Heizung 3 zugeführt werden, wonach aufgrund einer weiteren Umschaltung 32 das nächste Wellen-Teilpaket wieder der Heizung 4 zugeführt wird usw. Das Verhältnis der Anzahlen der Wellen zwischen den beiden Wellenteilpaketen 33, 34 kann dabei konstant bleiben oder, z. B. temperaturabhängig, veränderbar sein. Die Umschaltung 32 erfolgt in jedem Fall beim Durchgang 31 der Kennlinie 29 durch die Null-Linie 30.

Die beschriebene periodische Umschaltung kann zwar in jedem Temperatur- bzw. eingestellten Leistungsbereich der Heizeinheit, d.h. auch im niedrigeren bzw. niedrigsten Leistungsbereich vorgesehen sein, besonders zweckmäßig.ist sie jedoch in höheren bzw. im höchsten Leistungsbereich, da dann eine schlechte Wärmeentnahme in einem Flächenbereich 13 bzw. 14 schnell zur Überhitzung dieses Flächenbereiches führen kann. In mindestens einem Leistungsbereich, z. B. im niedrigeren oder niedrigsten Leistungsbereich kann die Größe der beiden Wellen-Teilpakete 33, 34 etwa gleichgroß sein, während erst im höheren bzw. höchsten Leistungsbereich die genannte Differenzierung dieses Größenverhältnisses erfolgt, um z. B. dem Umstand Rechnung zu tragen, daß Kochgefäße in der Regel im äußeren Flächenbereich 13 einen besseren Wärmeübergang ermöglichen als im inneren Flächenbereich 14. Die Differenzierung des Größenverhältnisses kann dabei mit zunehmender Temperatur im Bereich der Heizfläche 2 auch kontinuierlich oder schrittweise zunehmen.

Durch die periodische Umschaltung wird praktisch aus einer einzigen Zuleitung über eine Weiche die elektrische Energie laufend bzw. nur mit sehr kurzen Unterbrechungen an mindestens zwei Heizungen 3, 4 desselben Heizfeldes verteilt. Die Zeitintervalle der Zuteilung bzw. Unterbrechung sind dabei im Verhältnis zur thermischen Trägheit im Bereich der Heizfläche 2 so kurz, daß die Temperatur des jeweiligen Flächenbereiches während der Zuteilung nicht oder nur sehr unwesentlich über die Temperatur während der Unterbrechung der Zuteilung ansteigt, bzw. daß die Temperatur während dieser Unterbrechung nicht oder nur sehr unwesentlich unter die Temperatur während der Zuteilung absinkt. Wegen der kurzen Zeitintervalle ergeben sich im Bereich der Heizfläche 2 bzw. der Flächenbereiche 13, 14 konstante Temperaturen bzw. über zahlreiche Umschalt-Perioden gleichgerichtet kontinuierliche Temperaturänderungen, weil stets praktisch beide oder alle Heizungen 3, 4 gleichzeitig in Betrieb bleiben und während der Zuteilungspausen aufgrund ihrer thermischen Trägheit in der beschriebenen Weise nicht wesentlich unter ihre Betriebstemperatur abkühlen, sondern vor einer solchen Abkühlung bereits wieder mit elektrischer Energie versorgt werden.

## Patentansprüche

1. Elektrische Heizeinheit, insbesondere für eine Kochstelle, mit einem Heizbereich (2) und mindestens zwei wechselweise auf Heizbetrieb zu schaltenden elektrischen Heizungen (3, 4), die jeweils eine Betriebs-Nennleistung bestimmen, sowie für Einzelbereiche (13, 14) des Heizbereiches (2) vorgesehen und über Temperaturfühler (7, 8) mit Steuermitteln (10) steuerbar sind, welche zur periodischen Umschaltung wenigstens eines Teiles einer Nennleistung zwischen mindestens zwei der Heizungen (3, 4) vorgesehen sind, **dadurch gekennzeichnet, dass** die Steuermittel (10) für die Umschaltung Mittel zur Erfassung des Temperaturverhältnisses der Einzelbereiche (13, 14) umfassen, wobei die einer Heizung (3) zugeführte Leistung in Abhängigkeit der erfassten Temperaturverhältnisse um einen bestimmten Betrag verringert wird und etwa dieser Leistungsbetrag einer anderen Heizung (4) der Heizeinheit (1) zugeführt wird.

2. Heizeinheit nach Anspruch 1, **dadurch gekennzeichnet, daß** die Heizungen (3, 4) vorwiegend zur gesonderten Beheizung der gesonderten Einzelbereiche (13, 15) vorgesehen und die Steuermittel (10) zur gesonderten Temperatur-Regelung der Einzelbereiche (13, 14) durch hin- und hergehende Leistungsverschiebung einer insbesondere etwa konstant zugeführten elektrischen Leistung zwischen mindestens zwei Heizungen (3, 4) ausgebildet sind, wobei insbesondere Pausen der Leistungszuführung im wesentlichen kürzer als eine Zeitverzögerung sind, mit welcher aufgrund einer thermischen Trägheit im Bereich der jeweiligen Heizung (3, 4) eine Temperatursenkung einsetzt und daß vorzugsweise die Zeitintervalle zwischen aufeinanderfolgenden Umschaltungen und/oder die Periodendauer zwischen zwei gleichsinnigen Umschaltungen veränderbar sind.

3. Heizeinheit nach Anspruch 1 oder 2, **dadurch gekennzeichnet, daß** bei Betrieb der Heizungen (3, 4) mit Wechselstrom von einer gegebenen, eine Null-Linie (30) definierenden, Wechselstrom-Kurvenform (29) die Zuschaltung einer Heizung (3 bzw. 4) im wesentlichen an derselben Stelle der Kennlinie (29) wie die Abschaltung einer anderen Heizung (4, 3) erfolgt, daß insbesondere eine im wesentlichen lückenlose elektronische Umschaltung vorgesehen ist und/oder die Leistungsabnahme in beiden Umschalt-Zuständen etwa gleich groß ist, daß vorzugsweise mindestens zwei Heizungen (3, 4) im Heizbetrieb jeweils mit der Nennleistung konstant betrieben bzw. nur durch Ein- und Ausschalten als Funktion von Einschaltzeiten gesteuert sind, wobei die Periodendauer insbesondere wesentlich unter einer Minute bzw. höchstens in der Größenordnung einer Sekunde liegt und daß vorzugsweise die Umschaltung im wesentlichen im Durchgang (31) der Kennlinie (29) durch die Null-Linie (30) erfolgt bzw. der jeweiligen Heizung (3, 4) ausschließlich Wellenpakete aus Vollwellen der Kennlinie (29) als Leistung zugeführt werden.

4. Heizeinheit nach einem der vorhergehenden Ansprüche, **dadurch gekennzeichnet, daß** die Umschaltung in Abhängigkeit von Temperaturänderungen im Bereich mindestens eines der zugehörigen Einzel- bzw. Flächenbereiche (13, 14) gesteuert ist und daß insbesondere für mindestens zwei Einzelbereiche (13, 14) gesonderte Temperaturfühlungen (7, 8) vorgesehen sind, daß vorzugsweise die Umschaltung in wenigstens einem, insbesondere niedrigeren, Betriebs-Temperaturbereich im wesentlichen zeitabhängig und/oder in einem oberhalb einer Grenztemperatur, insbesondere von etwa 250°C, liegenden Temperaturbereich im wesentlichen temperaturabhängig gesteuert ist, und daß vorzugsweise mindestens eines der Zeitintervalle der Umschaltung mindestens zweier Heizungen (3, 4) manuell einstellbar ist bzw. wenigstens zwei Einzelbereiche (13, 14) manuell einstellbar mit unterschiedlicher Betriebstemperatur betreibbar sind.

5. Heizeinheit nach einem der vorhergehenden Ansprüche, **dadurch gekennzeichnet, daß** die Steuermittel (10) als Überhitzungsschutz vorgesehen sind und insbesondere bei Erreichen einer Höchsttemperatur mindestens einen Teil der Nennleistung wenigstens einer bis aller Heizungen (3, 4) abschalten und/oder daß die Steuermittel (10) zur Topferkennung ausgebildet sind, insbesondere als Funktion der Zeitdauer eines Temperaturverhältnisses zwischen mindestens zwei Einzelbereichen (13, 14).

6. Heizeinheit nach einem der vorhergehenden Ansprüche, **dadurch gekennzeichnet, daß** mindestens zwei Heizungen (3, 4), insbesondere in einer Ankochphase, gleichzeitig betreibbar und vorzugsweise temperatur- und/oder zeitabhängig auf gesonderte Temperatur-Regelung und/ oder periodische Umschaltung (32) umstellbar sind.

7. Heizeinheit nach einem der vorhergehenden Ansprüche, **dadurch gekennzeichnet, daß** die Temperaturfühlung (7, 8) im Bereich eines, insbesondere thermisch massearmen, Plattenkörpers vorgesehen ist und daß vorzugsweise mindestens zwei Einzelbereiche (13, 14) jeweils mindestens einen gesonderten Temperaturfühler (11, 12) aufweisen.

8. Heizeinheit nach einem der vorhergehenden Ansprüche, **dadurch gekennzeichnet, daß** mindestens eine Heizung (3, 4) durch wenigstens einen gesonderten, in einem gesonderten Heizkreis angeordneten, Heizwiderstand (5, 6) gebildet ist und daß insbesondere alle Heizungen (3, 4) in gesonderten Heizkreisen liegen und/oder daß mindestens zwei Heizungen (3, 4) nebeneinander, insbesondere ringförmig ineinander, liegen und daß vorzugsweise diesen Heizungen (3, 4) thermisch zugehörige Einzelbereiche (13, 14) einander in einer Grenzzone (15) überschneiden.

9. Heizeinheit nach einem der vorhergehenden Ansprüche, **dadurch gekennzeichnet, daß** mindestens eine Heizung (3, 4) und/oder mindestens eine Temperaturfühlung (7, 8) wenigstens teilweise als Dickschicht-Widerstand ausge bildet und insbesondere strangförmig in wechselnden Richtungen bzw. mäanderartig angeordnet ist, und daß vorzugsweise mindestens zwei Heizungen (3, 4) und Einzelbereiche (13,14) einer gemeinsamen Standfläche für ein einziges Kochgefäß zugehörig sind, wobei insbesondere mindestens eine dieser Heizungen (3, 4) thermisch etwa achssymetrisch zu dieser Standfläche angeordnet ist.

10. Heizeinheit nach einem der vorhergehenden Ansprüche, **dadurch gekennzeichnet, daß** die Nennleistung der jeweiligen Heizung (3,4) einer Gesamt-Nennleistung der Heizeinheit (1) im wesentlichen gleich ist, wobei vorzugsweise nur zwei Heizungen (3, 4) vorgesehen sind, die zwei ringförmig ineinanderliegende Einzelbereiche (13, 14) mit einem unbeheizten Zentrum bilden.

## Claims

1. An electric heating unit, particularly for a cooking point, comprising a heating area (2) and at least two electric heaters (3, 4) to be alternately switched to heating operation, each determining a rated operating capacity and provided for separate surface areas (13, 14) of the heating area (2) and controllable by control means (10) including temperature sensing means (7, 8), which are provided for periodical switching of at least a portion of a rated capacity between at least two of the heaters (3, 4), **characterized in that** for switching operation the control means (10) comprise means for the detection of the temperature ratio of the separate surface areas (13, 14), wherein the electrical power supplied to an electric heater (3) is reduced for a certain amount depending on the detected temperature ratio, wherein about this amount of electrical power is supplied to another heater (4) of the heating unit (1).

2. An electric heating unit according to claim 1, **characterized in that** the heaters (3, 4) are mainly provided for the separate heating of the separate surface areas (13, 14), and the control means (10) are adapted for the separate temperature control of the separate surface areas (13, 14) by reciprocating capacity displacement of an in particular approximately constant electrical power supply between at least two heaters (3, 4), the stop intervals of the power supply being significantly shorter than a time lag with which, as a result of a thermal inertia in the vicinity of the particular heater (3, 4), a temperature drop occurs and preferably the time intervals between successive switching operations and/or the period duration between two switching operations in the same direction preferably being variable.

3. An electric heating unit according to claim 1 or 2, **characterized in that** during the operation of the heaters (3, 4) with alternating current with a given characteristic (29) defining a zero line (30) associated with said alternating current characteristic, the switching on of a heater (3 or 4) occurs essentially at the same point of the characteristic (29) as the switching off of another heater (4, 3) that in particular there is provided a substantially continuous electronic switching and/or the power decrease in both switching states is approximately the same, that preferably at least two heaters (3, 4) in heating operation are constantly operated with the rated power, or are only controlled by the switching on and off as a function of transient times, the period duration particularly being significantly below one minute or at the most approximately one second, and preferably the switching over substantially occurs in the passage (31) of the characteristic (29) through the zero line (30) or the particular heater (3, 4) is supplied with power solely in the form of full wave groups from the characteristic (29).

4. An electric heating unit according to any of the preceding claims, **characterized in that** the switching over is controlled as a function of temperature changes in the vicinity of at least one of the associated surface areas (13, 14) and **in that** particularly for at least two surface areas (13, 14) separate temperature sensors (7, 8) are provided, **in that** preferably the switching over is controlled in at least one, particularly lower, operating temperature range in a ' substantially time-dependent and/or in a temperature range above a limit temperature, particularly of approximately 250 °C, substantially in temperature-dependent manner, and **in that** preferably at least one of the time intervals for switching over of at least two heaters (3, 4) is manually adjustable and preferably at least two surface areas (13, 14) are operable in manually adjustable manner with different operating temperatures.

5. An electric heating unit according to any of the preceding claims, **characterized in that** the control means (10) are provided as an overheating protection means and preferably on reaching a maximum temperature switch off at least one part of the rated power of at least one to all the heaters (3, 4) and/or that the control means (10) are constructed for pot detection, particularly as a function of the time duration of a temperature ratio between at least two surface areas (13, 14).

6. An electric heating unit according to any of the preceding claims, **characterized in that** at least two heaters (3, 4), particularly in a precooking phase, are simultaneously operable and can preferably be changed in temperature- and/or time-dependent manner to separate temperature regulation and/or periodic switching over (32).

7. An electric heating unit according to any of the preceding claims, **characterized in that** the temperature sensing (7, 8) is provided in the vicinity of an in particular thermally low-mass plate body and **in that** preferably at least two surface areas (13, 14) in each case have at least one separate temperature sensor (11, 12).

8. An electric heating unit according to any of the preceding claims, **characterized in that** at least one heater (3, 4) is formed by at least one separate heating resistor (5, 6) located in a separate heating circuit and **in that** particularly all the heaters (3, 4) are in separate heating circuits and/or at least two heaters (3, 4) are juxtaposed and particularly in ring-like manner within one another and **in that** preferably said heaters (3, 4) overlap thermally associated surface areas (13, 14) in a boundary zone (15).

9. An electric heating unit according to any of the preceding claims, **characterized in that** at least one heater (3, 4) and/or at least one temperature sensor (7, 8) is at least partly constructed as a thick-film resistor and preferably is arranged in strands of alternating directions or in a meandering course, and **in that** preferably at least two heaters (3, 4) and surface areas (13, 14) are associated with a common base surface for a single cooking vessel and wherein preferably at least one of these heaters (3, 4) is arranged thermally roughly axially symmetrically to said base surface.

10. An electric heating unit according to any of the preceding claims, **characterized in that** the rated power of the particular heater (3, 4) is substantially the same as the total rated power of the heating unit (1) and preferably there are only two heaters (3, 4), which form two circular surface areas (13, 14) located within one another and having an unheated centre.

## Revendications

1. Unité de chauffage électrique, notamment pour une cuisinière, avec un champ de chauffage (2) et au moins deux chauffages (3, 4) électriques alternativement à brancher pour de mode opérationnel de chauffage, qui déterminent respectivement une puissance nominale de service ainsi que sont prévus pour des champs individuels (13, 14) du champ de chauffage (2) et sont commandables par sondage de température (7, 8) avec des moyens de commande (10), lesquels sont prévus pour la commutation périodique d'au moins une partie d'une puissance nominale entre au moins deux des chauffages (3, 4), **caractérisé en ce que** les moyens de commande (10) comprennent pour la commutation des moyens pour la saisie du rapport de températures des champs individuels (13, 14), la puissance apportée a une chauffage électrique (3) est reductionnée dependant du rapport de températures d'un certain valeur de puissance, et ce valeur est apporté a une autre chauffage (4) de l'unité de chauffage électrique (1).

2. Unité de chauffage selon la revendication 1, **caractérisé en ce que** les chauffages (3, 4) sont prévus surtout pour le chauffage distinct des champs individuels (13, 15) distincts et les moyens de commande (10) sont formés pour le réglage de température distinct des champs individuels (13, 14) par déplacement de puissance de va-et-vient notamment d'une puissance électrique apportée de façon environ constante entre au moins deux chauffages (3, 4), des pauses d'apport de puissance étant notamment essentiellement plus courtes qu'un délai temporel, avec lequel commence un abaissement de température dans le champ du respectif chauffage (3, 4) à cause d'une inertie thermique et **en ce que** de préférence les intervalles de temps entre des commutations se suivant l'une l'autre et/ou la durée de période entre deux commutations dans le même sens sont variables.

3. Unité de chauffage selon la revendication 1 ou 2, **caractérisé en ce que** pour le service des chauffages (3, 4) avec du courant alternatif, à partir d'une forme de courbe de courant alternatif (29), définissant une ligne de zéro (30), la mise en circuit d'un chauffage (3 respectivement 4) a lieu essentiellement à la même place de la caractéristique (29) comme la mise hors circuit d'un autre chauffage (4, 3), **en ce que** notamment une commutation électronique est prévue essentiellement sans lacunes et/ou la levée de puissance dans les deux états de commutation est environ de même grandeur, **en ce que** de préférence au moins deux chauffages (3, 4) sont actionnés en mode opérationnel de chauffage respectivement avec la puissance nominale de façon constante respectivement sont commandés seulement par mise en circuit et hors circuit en fonction de durées de mise en circuit, la durée de période notamment se trouvant essentiellement au-dessous d'une minute respectivement au plus dans l'ordre de grandeur d'une seconde et **en ce que** de préférence la commutation a lieu essentiellement au passage (31) de la caractéristique (29) à travers la ligne de zéro (30) respectivement aux respectifs chauffages (3, 4) sont apportés comme puissance exclusivement des paquets d'ondes consistant d'ondes pleines de la caractéristique (29).

4. Unité de chauffage selon une des revendications précédentes, **caractérisé en ce que** la commutation est commandée en dépendance de changements de température dans le champ d'au moins un des champs individuels respectivement de surface (13, 14), associés et **en ce que** notamment pour au moins deux champs individuels (13, 14) sont prévus des sondages de température (7, 8) distincts, **en ce que** de préférence la commutation dans au moins un domaine de température de service notamment bas est commandée essentiellement en dépendance du temps et/ou dans un domaine de température se trouvant au-dessus d'une température limite, notamment de plus ou moins 250°C, est commandée essentiellement en dépendance de la température, et **en ce que** de préférence au moins un des intervalles de temps de la commutation d'au moins deux chauffages (3, 4) est réglable de façon manuelle respectivement au moins deux champs individuels (13, 14) réglables de façon manuelle sont actionables à température de service différente.

5. Unité de chauffage selon une des revendications précédentes, **caractérisé en ce que** les moyens de commande (10) sont prévus comme protection contre une surchauffe et notamment à l'atteinte d'une température maximale débranchent au moins une partie de la puissance nominale d'au moins un jusqu'à tous les chauffages (3, 4) et/ou **en ce que** les moyens de commande (10) sont formés pour la reconnaissance du récipient de cuisson, notamment en fonction de la durée temporelle d'un rapport de température entre au moins deux champs individuels (13, 14).

6. Unité de chauffage selon une des revendications précédentes, **caractérisé en ce que au** moins deux chauffages (3, 4), notamment dans une phase primaire de cuisson ou phase de mise en ébullition, sont opérables au même temps et de préférence sont convertibles en dépendance de température et/ou de temps à un réglage de température distinct et/ou commutation (32) périodique.

7. Unité de chauffage selon une des revendications précédentes, **caractérisé en ce que** le sondage de température (7, 8) est prévu dans le champ d'un corps de plaque, notamment de faible masse thermique, et **en ce que** de préférence au moins deux champs individuels (13, 14) présentent respectivement au moins une sonde thermique (11, 12) distincte.

8. Unité de chauffage selon une des revendications précédentes, **caractérisé en ce que** au moins un chauffage (3, 4) est formé par au moins une résistance de chauffage (5, 6) distincte, disposée dans un circuit de chauffage distinct et **en ce que** notamment tous les chauffages (3, 4) se trouvent dans des circuits de chauffage distincts et/ou **en ce que** au moins deux chauffages (3, 4) se trouvent l'un à côté de l'autre, notamment l'un dans l'autre en forme annulaire, **et en ce que** de préférence des champs individuels (13, 14) associés thermiquement à ces chauffages (3, 4) s'entrecoupent dans une zone limite (15).

9. Unité de chauffage selon une des revendications précédentes, **caractérisé en ce que** au moins un chauffage (3, 4) et/ou au moins un sondage thermique (7, 8) est formé au moins en partie comme résistance à couche épaisse et notamment est disposé en forme de branche dans des directions changeantes respectivement en méandres, **et en ce que de** préférence au moins deux chauffages (3, 4) et champs individuels (13, 14) appartiennent à une surface de logement commune pour un seul récipient de cuisson, notamment au moins un de ces chauffages (3, 4) étant disposé thermiquement plus ou moins symétriquement par rapport à un axe envers cette surface de logement.

10. Unité de chauffage selon une des revendications précédentes, **caractérisé en ce que** la puissance nominale du respectif chauffage (3, 4)' est essentiellement égale à une puissance nominale totale de l'unité de chauffage (1), de préférence étant prévus seulement deux chauffages (3, 4), formant deux champs individuels (13, 14) se trouvant l'un dans l'autre en forme d'anneau, avec un centre non chauffé.
